# EUROPEAN PATENT SPECIFICATION

(11) **EP 1 914 283 B1**
(45) Date of publication and mention of the grant of the patent: **29.09.2010**
(21) Application number: 06425710.8
(22) Date of filing: 16.10.2006
(51) Int. Cl.: C09D 163/00, C09D 183/06, C08K 3/22

(54) **Photo-catalytic coating for metal materials**
Photo-katalytische Beschichtung für Metalle
Revêtement photo-catalytique pour métaux

(43) Date of publication of application: 23.04.2008
(73) Proprietor: Global Engineering S.r.L., 20121 Milano (IT)
(72) Inventor: Terruzzi, Claudio, 20123 Milano (IT)
(74) Representative: Lunati, Vittoriano

(56) References cited:
- US-A- 5 804 616
- US-A1- 2003 153 682
- US-A1- 2004 249 044
- US-B1- 6 667 360

## Description

The present invention relates to a photo-catalytic coating for metal materials, of the type specified in the preamble of the first patent claim.

The process of photo-catalysis enabling the oxidization of pollutant or unclean substances is currently well-known.

Photo-catalysis is based on the use of electric charges, or electrons, made available by semiconductors when these are stimulated by certain electromagnetic waves.

A preferred semiconductor for activation of the process of photo-catalysis is titanium dioxide (TiO₂) in the form of anatase.

The electrons provided by the titanium dioxide constitute a negative electric charge which unites easily with other molecules present in the environment. In particular, it unites with molecules of oxygen (O₂) present in the atmosphere, forming negative ions (O₂⁻ or O⁻).

O₂⁻ and O⁻ ions are very reactive and unite with the molecules of pollutant substances present in the environment, especially with nitrogen oxides (NOₓ), which are principally nitrogen monoxide and dioxide (NO o NO₂), forming negative ions NO₃⁻ or with carbon monoxide (CO) giving rise to a molecule of carbon dioxide CO₂.

It is not just oxides of nitrogen and carbon which are oxidized by the photo-catalytic process, but many other harmful substances such as: benzene, toluene, etilbenzene, m-xilene, ozone, sulphur dioxide, formaldehyde, acetaldehyde, PM x, methanol, ethanol...

Various experiments have demonstrated a significant reduction of pollutants where surfaces with photo-catalytic effect have been created, such as streets, paths and walls. Especially remarkable is the creation of cement or bituminous surfaces having photo-catalytic effect.

The said technique, however, presents some significant drawbacks.

It is not actually possible to produce coatings such as paints and similar substances which have photo-catalytic effect for metal materials. Such coatings would be very suitable especially for motor vehicles, bridges and other metal structures.

Metal materials have in fact a very high thermal expansion coefficient in comparison with cements and similar substances. These expansions, when they are not counterbalanced by high elasticity of the coating, cause the coating itself to crack and rupture.

Coatings have therefore been devised for metal materials which are realized by suitable resins whose elasticity is sufficient to compensate for high thermal distortions of the metals.

Similar coatings are described in patent documents US-A-2004/249244, US-A-2003/153 682 and US-B-5804616 and they don't have any photo-catalytic effect.

However, these coatings are not chemically compatible with the process of photo-catalysis of particles of titanium dioxide.

In particular, the chemical reactions of photo-catalysis described above lead to the breakage of the cross-links in the polymer materials which make up the siloxane or epoxy coating.

The durability of the photo-catalytic coatings for metal materials, therefore, is limited to periods of a few days or weeks.

The technical problem of how to devise a photo-catalytic coating for metal materials with high photo-catalytic activity and high durability over time, remains therefore unresolved.

In this context, the technical aim of the present invention is to create a photo-catalytic coating for metal materials, which fundamentally resolves these drawbacks.

Within said technical aim, one important aim of the invention is to create a highly-durable photo-catalytic coating for metal materials.

Another important aim of the invention is to produce a photo-catalytic coating for metal materials which can activate a significant photo-catalytic action.

The technical aim and the specified purposes are achieved by one photo-catalytic coating for metal materials, as claimed in the enclosed Claim 1.

Recommended methods are shown in the sub-claims.

The features and advantages of the invention are better explained below in the detailed description of a preferred embodiment of the invention, with reference to the attached drawings, wherein:

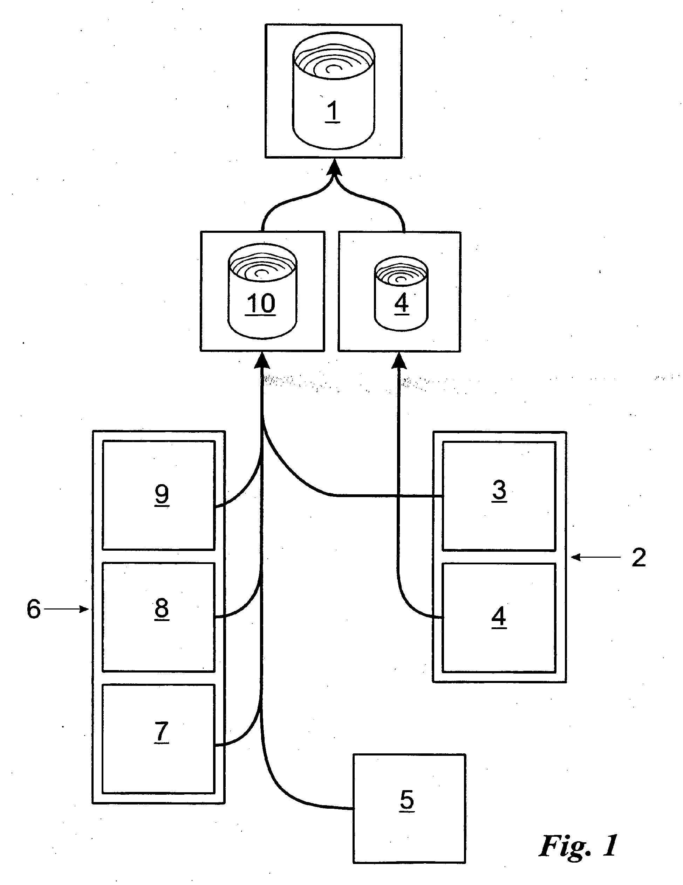

**Fig. 1** shows a flow diagram indicating the components of the photo-catalytic coating according to the invention.

With reference to the Figures cited, the photo-catalytic coating for metal materials as specified in the invention patent is indicated as a whole by the number **1.**

It comprises a film-forming substance **2** realized by a liquid resin which forms a resistant and elastic film after polymerization on contact with air.

In particular, the film-forming substance **2** is a bio-composite resin, i.e. a resin with two separate components, one basic component **3** and one catalyst or hardener **4.** The two components 3 or 4 are in a liquid state and, after union and mixing, they form the film-forming substance 2 which should be employed within a preordained time before polymerization in air.

In particular, the film-forming substance 2 is a siloxane resin, preferably an epoxy-siloxane resin.

A similar epoxy-siloxane resin is marketed for instance by BASF under the name Silikotel, and the basic component 3, in particular, is marketed under the name Silikotel EF, while the catalyst **4** is marketed under the name Silikotel Ameo. Said epoxy-siloxane resin is also marketed by Tego under the name Silikoftal ED.

The photo-catalytic coating 1 also comprises a solvent **5,** intended to act as a fluidifier of the film-forming substance 2.

The solvent 5 is realized in particular by butyl acetate.

The photo-catalytic coating 1 also comprises charges **6,** which should include: inert materials **7,** pigments **8** and obviously the photo-catalytic particles **9.**

The charges 6 are intended to give volume and thickness to the coating 1, as well as other features to be specified in what follows.

The inert materials 7 are realized preferably by calcium carbonate (CaCO₃) which are of neutral colour and do not have chemical properties.

On the other hand, the pigments 8 can have the effect of colouring the coating 1. They are preferably realized by titanium dioxide in the form of rutile; similar pigments 8 are produced for example by Dupont (Ti-Pure R-706), or by Millennium Chemicals (595).

Finally, the catalytic particles 9 are realized by semiconductors having an energy gap between the valence band and the conduction band exceeded by the energy provided by the solar photons. In particular, titanium dioxide (TiO₂) is utilized in the form of anatase realized by particles having a specific surface area, i.e. the area of the total surface occupied by one gram of particles, being between 100 m²/g and 60 m²/g, preferably in the region of 80 m²/g.

Similar particles 9 are marketed by Millennium Chemicals under the name PC 105.

The components described are present in specific ratios.

In fact, the volumetric percentage of the charges 6, generally known as total PVC (Pigment Volume Concentration) is between 15% and 50%, more particularly between 33% and 38%, of the total volume of the coating 1.

The volumetric percentage of the photo-catalytic particles 9 on their own, however, is comprised between 1% and 9%, more particularly between 4% and 6%, of the total volume of the coating 1.

The percentages by weight of the different elements, in relation to the total weight of the coating which makes up coating 1 are indicated as follows.

The basic component 3 of the film-forming substance 2 is present in percentages comprised between 15% and 42%, preferably between 27% and 29%.

The catalyst 4 of the film-forming substance 2 is present in percentages comprised between 4% and 12%, preferably between 7% and 8%.

The solvent 5 is present in percentages comprised between 1% and 3%.

The inert materials 7 are present in percentages comprised between 7% and 35%, preferably between 27% and 29%.

The pigments 8 are present in percentages comprised between 11% and 50%, preferably between 30% and 33%.

The preferred composition of the coating 1 is indicated in the inventory below.

| | Component | Mass | PVC |
|---|---|---|---|
| Pigment 8 | Dupont R-706 | 31.11 | 15% |
| Photo-catalytic particles 9 | Millennium Chemical PC105 | 10.38 | 5% |
| Inert material 7 | Calcium carbonate | 21.01 | 16% |
| Basic component 2 | BASF Silikotel EF | 28.23 | |
| Catalyst 4 | BASF Silikotel Ameo | 7.73 | |
| Solvent 5 | Butyl acetate | 1.56 | |
| Coating 1 | TOTAL | 100.00 | 35% |

The coating 1 is placed in suitable containers before use.

It is utilized in the traditional ways of applying and spreading paints or resins.

In particular, coating 1 is bio-composite, i.e. it is composed of two liquid components which must be mixed together prior to spreading.

One component is made up of the catalyst for the polymerization 4, while a second component **10** is formed from all the other elements making up the coating 1. As soon as both components are united and mixed, the film-forming substance begins to polymerize and, if it is coated within a week, it produces the coating 1 described.

The invention achieves important advantages.

The coating 1 may in actual fact be applied to metal materials and is of very high durability, it is not subject to cracking or rupture after its spreading and polymerization.

The elasticity of the film-forming substance 2 lends the coating the required elasticity.

At the same time the reactions of photo-catalysis do not chemically degrade the coating.

After numerous tests, the surprising discovery was made that the coating 1, applied to metal materials, has an average life equivalent to about five years.

It was further established that the coating 1 stimulates considerable photo-catalytic activity in the reduction of pollutant substances and the like, especially of nitrogen oxides (NOₓ).

The benefits described are due, in the applicant's estimation, to the particular quantities of charges 6.

In fact, in contrast with other coatings which presented the drawbacks described, the coating 1 shows a much-reduced total PVC.

Various attempts to realize the invention, made by the applicant himself and by various firms in the sector, had met with some progress towards resolution of the problems described, by producing coatings with a very high total PVC, close to 70%. The present invention, however, reveals excellent and unexpected features of the coating 1, which demonstrates a total PVC comprised between 15% and 50%, more particularly between 33% and 38%.

The coating 1 may therefore be applied to motor vehicles, bridges and various metal structures, having the effect of significantly reducing pollutant substances present in the environment.

## Claims

1. Photo-catalytic coating (1) for metal materials including a film-forming substance (2), consisting in a siloxane resin, charges (6), present in volumetric percentages comprised between 15% and 50% and including photo-catalytic particles (9), and a solvent (5), and **characterized in that** said photo-catalytic particles (9) are present in volumetric percentages comprised between 1% and 9% with reference to said coating (1).

2. Coating according to claim 1, said charges (6) are present in volumetric percentages comprised between 33% and 38% with reference to said coating (1).

3. Coating according to claim 1 or 2, wherein said film-forming substance (2) is an epoxy-siloxane resin.

4. Coating according to claim 2, wherein said film-forming substance (2) is composed of one basic component (3), present in quantities by weight comprised between 15% and 42% of the quantity in weight of said coating (1), and one catalyst (4), present in quantities by weight comprised between 4% and 12% with reference to the quantity in weight of said coating (1), aimed at activating the cross linking of the basic component (3).

5. Coating according to claim 3, wherein said basic component (3) is present in quantities by weight comprised between 27% and 29% with reference to the quantity by weight of said coating (1), and said catalyst (4) is present in quantities by weight comprised between 7% and 8% with reference to the quantity in weight of said coating (1).

6. Coating according to one or more of the preceding claims, in which said photo-catalytic particles (9) are present in volumetric percentages comprised between 1% and 9% with reference to said coating (1).

7. Coating according to one or more of the preceding claims, in which said photo-catalytic particles (9) are substantival made up of titanium dioxide in the form of anatase.

8. Coating according to claim 7, in which said particles (9) have a specific surface area of between 100 m²/g and 60 m²/g.

9. Coating according to one or more of the preceding claims, in which said charges comprise pigments (8) realized by titanium dioxide in the form of rutile and present in quantities by weight comprised between 11% and 50% with reference to the quantity in weight of said coating (1).

10. Coating according to one or more of the preceding claims, in which said charges comprise inert materials (7) realized by calcium carbonate and present in quantities by weight comprised between 7% and 35% with reference to the quantity in weight of said coating (1).

## Patentansprüche

1. Photokatalytische Beschichtung (1) für Metalle bestehend aus einer filmbildenden Substanz (2) aus einem Siloxan-Harz, in volumetrischen Anteilen zwischen 15% und 50% vorhandenen und photokatalytische Partikel (9) umfassende Ladungen (6), und einem Lösungsmittel (5), **dadurch gekennzeichnet, dass** genannte photokatalytische Partikel (9) in volumetrischen Anteilen zwischen 1% und 9% mit Bezug auf genannte Beschichtung 1 vorhanden sind.

2. Beschichtung nach Anspruch 1, wobei genannte Ladungen (6) in volumetrischen Anteilen zwischen 33% und 38% mit Bezug auf die genannte Beschichtung (1) vorhanden sind.

3. Beschichtung nach Anspruch 1 oder 2, worin die genannte filmbildende Substanz (2) ein Epoxyd-Silocan-Harz ist.

4. Beschichtung nach Anspruch 2, worin genannte filmbildende Substanz (2) aus einem in Gewichtsanteilen zwischen 15% und 42% der Gewichtsmenge der genannten Beschichtung (1) vorhandenen Grundbestandteil (3) und einem in Gewichtsanteilen zwischen 4% und 12% mit Bezug auf die Gewichtsmenge der genannten Beschichtung (1) vorhandenen Katalysator (4) besteht, mit dem Ziel, die Vernetzung des genannten Grundbestandteils (3) zu aktivieren.

5. Beschichtung nach Anspruch 3, worin genannter Grundbestandteil (3) in Gewichtsanteilen zwischen 27% und 29% mit Bezug zum Gewichtsanteil der genannte Beschichtung (1) vorhanden ist und genannter Katalysator (4) in Gewichtsanteilen zwischen 7% und 8% mit Bezug auf die Gewichtsmenge der genannten Beschichtung (1).

6. Beschichtung nach einem oder mehreren vorstehenden Ansprüchen, worin genannte photokatalytischen Partikeln (9) in volumetrischen Anteilen zwischen 1% und 9% mit Bezug auf genannte Beschichtung (1) vorhanden sind.

7. Beschichtung nach einem oder mehreren vorstehenden Ansprüchen, worin genannte photokatalytischen Partikeln (9) im Wesentlichen aus Titandioxid in Form von Anastas bestehen.

8. Beschichtung nach Anspruch 7, worin genannte Partikeln (9) eine spezifische Oberfläche zwischen 100 m²/g und 60 m²/g haben.

9. Beschichtung nach einem oder mehreren vorstehenden Ansprüchen, worin genannte Ladungen aus Titandioxid in Form von Rutil hergestellte Pigmente (8) umfassen, die in Gewichtsanteilen zwischen 11% und 50% mit Bezug auf die Gewichtsmenge der genannten Beschichtung (1) vorhanden sind.

10. Beschichtung nach einem oder mehreren vorstehenden Ansprüchen, worin genannte Ladungen aus Calciumcarbonat hergestellte Inertstoffe (7) umfassen, die in Gewichtsanteilen zwischen 7% und 35% mit Bezug auf die Gewichtsmenge der genannten Beschichtung (1) vorhanden sind.

## Revendications

1. Revêtement photo-catalytique (1) pour métaux comprenant une substance formant pellicule (2), se composant d'une résine siloxane, de charges (6) présentes en pourcentages volumétrique compris entre 15% et 50% et comprenant des particules photo-catalytiques (9) et d'un solvant (5), et **caractérisé en ce que** lesdites particules photo-catalytiques (9) sont présentes en pourcentages volumétriques compris entre 1% et 9% par rapport audit revêtement (1).

2. Revêtement selon la revendication 1, lesdites charges (6) étant présentes en pourcentages volumétriques compris entre 33% et 38% par rapport audit revêtement (1).

3. Revêtement selon la revendication 1 ou 2, dans lequel ladite substance formant pellicule (2) est une résine époxydique-siloxane.

4. Revêtement selon la revendication 1, dans lequel ladite substance formant pellicule (2) se compose d'un élément composant de base (3) présent en quantités en poids comprises entre 15% et 42% de la quantité en poids dudit revêtement (1), et d'un catalyseur (4) présent en quantités en poids comprises entre 4% et 12% de la quantité en poids dudit revêtement (1), ayant pour but d'activer la réticulation de l'élément composant de base (3).

5. Revêtement selon la revendication 3, dans lequel ledit élément composant de base (3) est présent en quantités en poids comprises entre 27% et 29% de la quantité en pois dudit revêtement (1), et ledit catalyseur (4) est présent en quantités en poids comprises entre 7% et 8% de la quantité en poids dudit revêtement (1).

6. Revêtement selon une ou plusieurs des revendications précédentes, dans lequel lesdites particules photo-catalytiques sont présentes en pourcentages volumétriques compris entre 1% et 9% dudit revêtement (1).

7. Revêtement selon une ou plusieurs des revendications précédentes, dans lequel lesdites particules photo-catalytiques (9) sont essentiellement formées de dioxyde de titane sous forme d'anatase.

8. Revêtement selon la revendication 1, dans lequel lesdites particules (9) ont une aire superficielle spécifique comprise entre 100 m²/g et 60 m²/g.

9. Revêtement selon une ou plusieurs des revendications précédentes, dans lequel lesdites charges comprennent des pigments (8) réalisés par du dioxyde de titane sous forme de rutile et présents en quantités en poids comprises entre 11 % et 50% de la quantité en poids dudit revêtement (1).

10. Revêtement selon une ou plusieurs des revendications précédentes, dans lequel lesdites charges comprennent des matériaux inertes (7) réalisés par du carbonate de calcium et présents en quantités en poids comprises entre 7% et 35% de la quantité en poids dudit revêtement (1).
